# EUROPEAN PATENT APPLICATION

(11) **EP 1 815 977 A1**
(43) Date of publication of application: **08.08.2007**
(21) Application number: 05028546.9
(22) Date of filing: 28.12.2005
(51) Int. Cl.: B32B 27/36, B32B 5/24, B29C 43/14, B29C 51/02, B29C 51/14

(54) **Recyclable automotive panel, process and plant for manufacturing the same**

(71) Applicant: DI.CO.T s.r.l., 20090 Caleppio di Settala MI (IT)
(72) Inventor: Labitzke, Ekkehard, 95189 Koeditz (DE)
(74) Representative: Bottero, Claudio

(57) **Abstract**

An automotive panel (26, 30) is described including a totally recyclable polyester part (8) comprising a first layer (4) comprising a polyester material selected from polyester foams, polyester beads, and combinations thereof; and at least a second layer (3) comprising a polyester non-woven fabric, wherein said first (4) and second (3) layers have a degree of crystallinity of at least 25%.

Such a panel (26, 30) may be manufactured by means of a process comprising the steps of: a) providing a first layer (4) comprising a polyester material selected from polyester foams, polyester beads, and combinations thereof; b) providing at least a second layer (3) comprising a polyester non-woven fabric; c) superposing the first (4) and second (3) layers; d) simultaneously pressing and heating the superposed polyester layers (3, 4) so as to bond them together and to promote at least a partial crystallization thereof; e) shaping the superposed layers (3, 4) so as to form the automotive panel (26, 30).

A plant (21) for manufacturing a panel (26, 30) comprising a heated press (23) and optionally a shaped mold (25) is also provided.

## Description

### Field of the invention

The invention relates to an automotive panel including a totally recyclable polyester part, to a process for manufacturing the same and to a plant for carrying out the process.

### Background of the invention

Automotive panels, such as roof panels and head liners, typically include a plurality of layers of different materials designed to absorb sound and vibrations and to provide sufficient flexibility to the panel in order to facilitate installation in the vehicle, while also providing sufficient rigidity to the panel to enable it to be self-supporting once installed in the vehicle. Typically, a number of layers of different components are used to achieve the various desired properties.

### Prior art

Current automotive panels are typically manufactured out of layers of polyethylene terephthalate (PET) and fiberglass, 100% fiberglass, polyurethane foams, cardboard, or resinated cotton fibers. They are often produced with a decorating layer, in particular a textile, laminated on the rear side by applying a soft plastic layer, as disclosed, for example, in US Patent Application published under No. 2004-076814 or in US Patent Application published under No. 2004-081792, to impart a so-called "soft touch" to the vehicle interior lining.

Several references disclose automotive panels made of a one-component material for facilitating their recyclability.

European Patent application EP 1477367 discloses a decorating tri-layer product, for vehicle interior cladding, comprising a decorating layer made of a woven- or knitted fabric, an intermediate film and a plastic substrate, all made of polyolefins (preferably polypropylene and/or polyethylene). The decorating layer is bonded to the plastic substrate without using adhesives by means of the intermediate film. Such a product is manufactured by means of a rear-injection process at 180-280°C and a pressure of 55-70 bar. The temperature of the mold surface contacting the decorating layer is lower than 40°C. According to this reference, the product is readily recycled without separating the component parts, recycling can take place inclusive of any filler used and the resultant surface appearance is good.

The Applicant found that this product shows poor sound absorption characteristics and a poor "soft touch" achieved in an expensive manner.

German Patent application DE 4214389 discloses a layered article, particularly for use in inside cars, having a decorating or surface layer, an adjacent soft spacer layer and, if appropriate, a substrate bonded to the latter. All the layers are made of one or more thermoforming polymers and are bonded together mechanically and/or chemically/physically without any adhesive. Preferred polymers are thermoplastic polymers, e.g., polyamide, polyolefins (particularly polyethylene or polypropylene), polyester, and particularly polyethylene-terephthalate or polybutylene-terephthalate. The Applicant found that this product shows a poor rigidity and a very difficult recyclability when different polymers are used.

US Patent Application published under No. US 2004-0247856 discloses a composite plastic material for vehicle, packaging and furniture components having a foamed core and reinforcement based on the same thermoplastic material, preferably polypropylene or a copolymer of polypropylene. The Applicant found that this product shows poor sound absorption characteristics.

US Patent No. 6,774,161 discloses a process for the cold molding of particulate materials for interior automotive trim by preheating a binder and the material to be bonded to a temperature of from 160° to 240°C and then press molding at a temperature lower than 80°C. The binder comprises a polymer powder or an aqueous polymer dispersion thereof, the polymer having a glass transition temperature greater than 80°C and a complex viscosity less than 15,000 Pa.s at 190°C, said polymer containing one or more comonomer units selected from the group consisting of vinyl esters of optionally branched C₁-C₁₈ alkyl carboxylic acids, (meth)acrylic esters of optionally branched C₁-C₁₅ alcohols, dienes, olefins, vinyl aromatics, and vinyl halides. According to this reference, the use of binders based on non-crosslinkable thermoplastic polymers would allow the production of automotive roofliners with adequate stiffness and heat resistance at 85°C, without the use of combination of polyester fibers and bicomponent polyester fibers with glass fiber mats, as known in the art.

The Applicant found that the process disclosed in this reference has the disadvantage that the temperature of the press molding step (lower than 80°C) is too low to be able to impart to the particulate material the desired properties needed for a headliner in the automotive industry.

US Patent No. 6,322,658 discloses a method for making a unitary composite headliner adapted to be installed within a vehicle including an inner layer, being configured to absorb sound and vibrations, and two reinforcing layers, being configured to provide sufficient flexibility to the headliner, each of which is made of recyclable thermoplastic polymer, to render the headliner entirely recyclable as a unit. The inner layer and the reinforcing layers are differentially heated to predetermined temperatures, the temperature of the inner layer being lower than the temperature of the reinforcing layers; then, all said layer are inserted into a mold and pressed together to form the headliner.

The Applicant found that this method has the disadvantage that preheating each layer at a different temperature and then pressing all the layers contemporaneously is cumbersome and time consuming.

### Summary of the invention

According to one aspect thereof, the present invention provides an automotive panel which may be easily recycled in a substantially complete manner and which is provided with good mechanical properties, such as good rigidity, self-supporting characteristics and elongation at break, good stability at high temperatures, good air flow resistance characteristics (i.e. good characteristics of sound absorbance), ease of installation, good surface finish, as required by the automotive industry.

According to a preferred aspect thereof, the present invention provides an automotive panel possessing good sound absorbance and good mechanical properties, such as elongation at break, ease of installation and surface finish, stable enough to high temperatures, entirely complying with the requirements of the automotive industry.

An automotive panel according to a general aspect of the present invention is defined in the enclosed claim 1.

More specifically, an automotive panel according to the invention includes a multi-layered totally recyclable polyester part comprising:
- a first layer comprising a polyester material selected from polyester foams, polyester beads, and combinations thereof; and
- at least a second layer comprising a polyester non-woven fabric, wherein said first and second layers have a degree of crystallinity of at least 25%.

The Applicant has observed that thanks to this combination of features the automotive panel may not only be totally recycled, but it is also capable at the same time to achieve surprisingly good mechanical properties, such as good rigidity and self-supporting characteristics and elongation at break, good stability at high temperatures, ease of installation, good surface finish, which allow the panel to be suitable for the most varied application within the automotive industry.

For the purposes of the present description and of the claims which follow, the expression: automotive panel, is used to indicate an interior trim for cars, trucks and all the other vehicles in the automotive industry. Such interior trims may be produced in many different shapes and dimensions and include, for example, headliners, door inner claddings, coverings for dashboards or for air bags, parcel shelves, as well as inner and outer wheelhouses.

For the purposes of the present description and of the claims which follow, the expression: totally recyclable polyester part, is used to indicate a polyester product including not more than 5% by weight of another plastic material selected from polyolefins or cross-linking resins.

For the purposes of the present description and of the claims which follow, the expression: degree of crystallinity, is intended to indicate the percentage of polyester material present in the crystalline state.

For the purposes of the invention, the degree of crystallinity can be measured according to known methods, such as, for example, by a differential scanning calorimetry (DSC) method, as disclosed by W.J. Sichina in Thermal Analysis, "DSC as Problem Solving Tool: Measurement of Percent Crystallinity of Thermoplastics", 2000 PerkinElmer Instruments, Norwalk CT, USA, or by a density method, by x-ray and electron diffraction techniques and by IR spectroscopy studies, as disclosed by Mishra S.P., in Asian Textile Journal, vol. 8, No.6, pp 94-96, 1999.

For the purposes of the present description and of the claims which follow, the expression: rigidity, is intended to indicate the ability of the panel to withstand the flexural mechanical stresses imparted thereto without bending too much or breaking.

For the purposes of the invention, the rigidity of the panel can be measured, for example, according to the "three point loading test" as disclosed in ISO Standard No. 899-2, 2003, wherein the flexural creep of plastic materials is determined; further methods for measuring the rigidity of an automotive panel are according to the ASTM D 790 Standard, as its ability to resist deformation under load (ratio of stress to strain in flexural deformation), or according to ISO standard No. 178 as flexural modulus.

For the purposes of the present description and of the claims which follow, except where otherwise indicated, all numerical values expressing parameters such as amounts, weights, temperatures, percentages, and so forth, are to be understood as being modified in all instances by the term "about". Also, all ranges include any combination of the maximum and minimum points disclosed and include any intermediate ranges therein, which may or may not be specifically enumerated herein.

In a preferred embodiment, both the aforementioned first and second layers of the panel have a degree of crystallinity of at least 30%, more preferably comprised in the range of 40-80%.

In this way, it is possible to advantageously impart stability and rigidity to the final product since the higher the percentage of crystallized polyester, the higher is the rigidity imparted to the panel.

In a preferred embodiment, the automotive panel of the present invention has an air flow resistance comprised between 500 and 1,200 Ns/m³, as measured according to DIN EN 29053.

More preferably, the air flow resistance of the automotive panel is comprised between 600 and 900 Ns/m³.

In this way, it is advantageously possible to provide an automotive panel having good sound absorption, that is a very important feature requested in the automotive industry. Generally speaking, automotive panels having air flow resistance values lower than 500 Ns/m³ are less preferred in the automotive industry, due to their low sound absorption properties.

Preferably, the thickness of the first polyester layer is comprised between 1 and 20 mm and more preferably between 2 and 12 mm.

In a preferred embodiment of the present invention, the first layer of the automotive panel includes and, still more preferably, is substantially made of polyester cell foam.

Preferably, the polyester foam has a basis weight comprised between 20 and 2,000 g/m² and more preferably between 90 and 1,000 g/m².

In this way, it is possible to advantageously provide a panel having good body consistency.

In another preferred embodiment of the present invention, the first layer of the polyester part comprises polyester beads alone or in combination with the polyester foam described above.

Preferably, each bead has a diameter comprised between 1 and 6 mm.

In this way, it is advantageously possible to provide a panel which possesses a reduced volume and a reduced weight, with a good air flow resistance.

Preferably, the thickness of the second layer is comprised between 3 and 30 mm and more preferably between 5 and 15 mm.

In a preferred embodiment, the totally recyclable polyester part may further comprise at least a third additional layer comprising and, still more preferably, being substantially made of a polyester non-woven fabric.

Preferably, the thickness of the third layer is comprised between 3 and 30 mm and more preferably between 5 and 15 mm.

In this preferred embodiment, the first layer of the polyester part is preferably interposed between the second and third layers, both comprising a polyester non-woven fabric, thereby achieving a sandwich structure.

This particular arrangement of the layers advantageously allows to achieve a very good air flow resistance, sound absorption and soft touch.

Preferably, at least one of the second and third layers comprises a polyester non-woven fabric selected from the group comprising: non-woven fabrics made of at least partially crystalline polyester fibers, non-woven fabrics made of carded polyester fibers, non-woven fabrics made of airlayed polyester fibers, non-woven fabrics made of thermobonded polyester fibers, non-woven fabrics made of needled bonded polyester fibers, non-woven fabrics made of hydroentangled bonded polyester fibers, non-woven fabrics made of spunbonded polyester filaments, non-woven fabrics made of meltblown polyester filaments, and mixtures thereof.

More preferably, at least one of the second and third layers comprises, more preferably is essentially made of, a mixture including:
i) a non-woven fabric made of at least partially crystalline polyester fibers, and
ii) a non-woven fabric made of needled polyester fibers.

Most preferably, both the second and third layers comprise, more preferably are essentially made of, a mixture including:
i) a non-woven fabric made of at least partially crystalline polyester fibers, and
ii) a non-woven fabric made of needled polyester fibers.

In this way, it is advantageously possible to provide panels having good thermal stability and molding properties.

Preferably, the aforementioned mixture comprises at least 20% by weight of a non-woven fabric made of at least partial crystalline polyester fibers; more preferably, the mixture comprises at least 60% by weight of a non-woven fabric made of needled polyester fibers.

In this way, technical properties such as air flow resistance and acoustics are advantageously improved.

Preferably, at least one of the aforementioned second and third layers comprises a polyester non-woven fabric comprising, more preferably being essentially made of, fibers or filaments having a Dtex comprised between 0.6 and 30, that is a diameter comprised in the range between 30 arid 80 micron.

As is known to those skilled in the art, Dtex is the unit for measuring the fibers diameter by indicating the weight expressed in grams of 10.000 linear meters of a single fiber.

More preferably, the Dtex of the fibers or filaments constituting the aforementioned polyester non-woven fabric is comprised between 1.7 and 12.

In this way, it is advantageously possible to adjust to optimum values the air flow resistance and the thickness of the panel.

Preferably, at least one of the second and third layers comprises a polyester non-woven fabric having a basis weight comprised between 10 and 1,500 g/m², more preferably comprised between 100 and 800 g/m².

In this way, it is advantageously possible to improve the air flow resistance of the panel and to more easily adjust the panel size.

In a preferred embodiment, the aforementioned totally recyclable polyester part further comprises at least a fourth additional layer comprising a polyester non-woven fabric, the fourth layer being positioned adjacent to one of the second and third layers comprising a polyester non-woven fabric.

This fourth layer may advantageously allow to further improve the air flow resistance of the panel whenever required.

Preferably, said fourth additional layer is positioned between the first layer and one of the second and third layers.

In this way, it is advantageously possible to improve some technical properties of the panel, such as acoustics.

Preferably, said at least a fourth additional layer is thinner than the second and third layers; more preferably, the thickness of said fourth layer is comprised between 0.8 and 1.9 mm.

In this way, the overall thickness of the panel may advantageously be kept at low values.

Preferably, said at least a fourth additional layer comprises a polyester non-woven fabric selected from the same group cited above for said second and third layers.

In a preferred embodiment, said at least a fourth additional layer is made of a non-woven fabric made of meltblown polyester filaments preferably having a Dtex comprised between 0.6 and 2.2, more preferably between 0.8 and 2.0.

In this way, it is advantageously possible to enhance the moisture resistance of the panel.

In a preferred embodiment, the automotive panel of the present invention may further comprise an outer decorating layer bonded to the multi-layered polyester part in order to impart to the automotive panel better finishing and aesthetic properties.

Preferably, the thickness of said outer decorating layer is comprised between 0.5 and 4 mm.

Preferably, the outer decorating layer is a polyester woven fabric, a polyester non-woven fabric, a polyester knitted fabric or a Maliwatt fabric.

Preferably, the outer decorating layer comprises a polyester woven fabric having a basis weight lower than 150 g/m², more preferably lower than 100 g/m².

In this way, it is advantageously possible to achieve an automotive panel comprising a decorating layer having a basis weight lower than the decorating layers generally used nowadays, having a basis weight generally being not lower than 200 g/m².

The outer decorating layer is bonded to one of the outermost layers of the multi-layered polyester part, for example to the first layer or to the second, third or fourth layer of the multi-layered polyester part depending upon the total number of layers present.

More preferably, the outer decorating layer is directly bonded to such outermost layer of the multi-layered polyester part so as to advantageously avoid the use of binders/adhesives thereby reducing the number of materials involved and to have a totally recyclable automotive panel.

Preferably, the total thickness of the panel is comprised between 5 and 25 mm, depending upon the number of layers which constitute the same.

According to a preferred aspect of the invention, the panel - regardless of its specific structure - is essentially constituted by layers made of one and the same material (polyester), so that the panel as a whole is a "one-component" product totally recyclable whichever is the number of layers comprised therein.

Illustrative but not-limiting examples of polyesters suitable to manufacture the polyester layers of the panel comprise: poly(alkylene dicarboxylates), such as, for example, poly(ethylene terephthalate), poly(trimethylene terephthalate), poly(butylene terephthalate), poly(propylene terephthalate), poly(ethylene naphthalate), poly(butylene naphthalate), poly(cyclohexanedimethanol terephthalate), poly(cyclohexanedimethanol-co-ethylene terephthalate), poly(1,4-cyclohexanedimethyl-1,4-cyclohexanedicarboxylate); and polyarylates, including but not limited to polyphthalate esters of 2,2-bis(4-hydroxyphenyl)propane (commonly known as bisphenol A polyarylates), and mixtures thereof.

Among these, particular preference is given to polyethylene terephthalate (PET), polypropylene terephthalate (PPT) and polybutylene terephthalate (PBT), and mixtures thereof.

In this way, it is possible to advantageously provide a panel having a high thermostability at about 145°C for a long period of time (about 48 hours), as requested by the automotive industry.

According to a further aspect thereof, the present invention is directed to a process for manufacturing an automotive panel, said process being easy, cheap and involving a reduced number of steps.

More specifically, the present invention provides a process for manufacturing an automotive panel as defined in the enclosed claim 28.

In particular, the process of the invention comprises the steps of:
a) providing a first layer comprising a polyester material selected from polyester foams, polyester beads, and combinations thereof;
b) providing at least a second layer comprising a polyester non-woven fabric;
c) superposing said first and at least a second layers;
d) simultaneously pressing and heating said superposed layers so as to bond together said superposed layers and to promote at least a partial crystallization of the polyester materials contained in said superposed layers;
e) shaping said superposed layers so as to form said automotive panel.

It has been found that such a process may be carried out in an easily and cheap manner, involves a reduced number of steps and allows to manufacture a partially crystalline panel which may be easily recycled and which is provided with good mechanical properties, such as good rigidity, good self-supporting characteristics and good elongation at break, good stability at high temperatures, good air flow resistance characteristics (i.e. good characteristics of sound absorbance), ease of installation, good surface finish, as required by the automotive industry.

According to the invention, the aforementioned step d) accomplishes two important technical effects, namely the bonding of the superposed polyester layers to achieve a unitary multi-layered polyester part and the partial crystallization of the polyester materials contained in the superposed layers.

Most advantageously, the superposed polyester layers are bonded to one another without using any adhesive thereby reducing costs and allowing to achieve a totally recyclable unitary multi-layered polyester part.

The Applicant, furthermore, has found that the partial crystallization of the polyester materials contained in the superposed layers surprisingly allows to achieve good rigidity of the panel without recurring to other materials which could impair the actual recyclability of the panel.

Preferably, step d) is carried out as to impart a degree of crystallinity of at least 25%, more preferably of at least 30%, to the superposed polyester layers.

In this way, it is possible to achieve the best results in terms of rigidity of the automotive panel manufactured by the process.

Preferably, the step d) is carried out so as to heat the aforementioned superposed polyester layers at a temperature comprised between 200°C and 240°C.

Preferably, the step d) is carried out so as to press the aforementioned superposed polyester layers at a pressure comprised between 10 and 350 T/m².

Preferably, the simultaneous pressing and heating step d) is carried out over a time period comprised between 5 and 60 seconds.

Preferably, step d) is carried out in a heated press provided with pressure plates and the thickness of the final panel to be obtained is determined by selecting in advance a proper gap between the pressure plates of the press.

In a preferred embodiment of the process, used to advantage whenever the panel to be manufactured is constituted by layers which may withstand the aforementioned temperatures of 200°C-240°C without degrading their desired properties, the shaping step e) may by carried out simultaneously with the pressing and heating step d) in a heated press provided with suitably shaped pressure plates.

In this case, the combination of pressure and temperature with the use of suitably shaped pressure plates allows to bond together the superposed polyester layers without using adhesive, to partially crystallize the polyester and to achieve the final panel to be obtained in one and the same step.

In an alternative embodiment of the process, used to advantage whenever the panel to be manufactured includes at least one layer, such as a decorating layer, which may not withstand the aforementioned temperatures of 200°C-240°C without degrading its desired properties, step d) is carried out in a flat heated press, while the shaping step e) is carried out subsequently to step d) in a shaped mold preferably operated at a temperature lower than the operating temperature of step d).

Preferably, the shaping step e) is carried out while the bonded layers obtained from step d) are still in a heated and deformable state.

In this way, it is advantageously possible to more easily shape the bonded layers and, optionally, a decorating layer positioned in the shaped mold.

In this preferred embodiment, the shaped mold is preferably maintained at a temperature comprised between 10°C and 40°C during the shaping step e).

In this preferred embodiment, furthermore, the process may comprise the step of transferring the bonded superposed layers obtained in the flat heated press to the shaped mold in a time lower than 10 seconds, more preferably lower than 6 seconds.

In this way, it is advantageously possible to effectively maintain the bonded layers leaving the heated press in the desired heated and deformable state reached as a consequence of the combined pressing and heating treatment carried out during step d).

Preferably, the shaping step e) is carried out so as to press the superposed layers housed in the shaped mold at a pressure comprised between 1 and 350 T/m², more preferably over a time period comprised between 3 and 15 seconds.

In this way, the shaping step e) allows to bond a temperature-sensitive layer to the superposed polyester layers already bonded together during step d) and to shape the final panel in one single step, without using any binder, such as for example adhesives.

In a preferred embodiment, the process of the present invention further comprises the steps of:
g) arranging a decorating layer in said shaped mold, prior to effecting said step e), and
h) press-bonding said decorating layer to said superposed layers during said shaping step e).

The execution of the shaping step e) in the shaped mold, preferably operated at a temperature lower than the operating temperature of the heated press and structurally independent from the latter, advantageously allows - as noted above - to bond a decorating layer, preferably made of polyester, to the previously bonded layers and to shape, at the same time, a multilayered panel comprising a decorating layer bonded to the polyester part including in turn superposed polyester layers manufactured in step d).

Advantageously, this embodiment avoids the risk of damaging the decorating layer, which is preferably made of a polyester material and which is unable *per se* to withstand the operating temperatures of the heated press without a substantial degradation of its properties and appearance, as would be the case if said decorating layer would be inserted into the heated press.

According to a preferred embodiment, the process may further comprise the step of sucking air from the shaped mold during the shaping step e).

In this way, it is advantageously possible to achieve an air permeable panel by enhancing the circulation of air through said superposed layers, thereby improving the air flow resistance characteristics and, along therewith, the sound absorption characteristics, of the final panel.

Preferably, air is sucked from the shaped mold by means of a vacuum pump which effectively allows to withdraw air from the layers being press-shaped in the shaped mold during the shaping step e), once part of the air originally present in the shaped mold has already been released therefrom by means of conventional air releasing means, such as check valve means.

According to a further aspect thereof, the present invention is directed to a plant for manufacturing an automotive panel comprising a multi-layered polyester part comprising superposed polyester layers and a decorating layer bonded to the polyester part.

More specifically, the present invention provides a plant as defined in the enclosed claim 41.

In particular, a plant according to this aspect of the invention comprises:
a) a heated press;
b) a shaped mold adapted to receive the decorating layer and positioned downstream of the heated press, and
c) a conveyor device positioned between the heated press and the shaped mold for transporting the multi-layered polyester part comprising said superposed polyester layers from the heated press to the shaped mold.

The Applicant found that a plant including this combination of features advantageously allows to effectively manufacture a totally recyclable panel comprising a multi-layered polyester part comprising superposed polyester layers and a polyester decorating layer having optimal characteristics of rigidity and outer appearance while avoiding the risk of damaging the decorating layer.

In a preferred embodiment, the heated press is a flat heated press, i.e. is provided with substantially flat pressure plates.

In this way, the shaping operations are carried out only in the shaped mold with a beneficial reduction of the press costs and time which may be equipped with more economic flat pressure plates.

In a preferred embodiment, the heated press provided with heating means, such as for example heating elements of the electric type, which allows to reach and maintain the desired operating temperature comprised, as said above, between 200°C and 240°C, so as to achieve the desired degree of crystallinity of the polyester materials.

For the purposes of the present description and of the claims which follow, it is to be understood that the operating temperature of the heated press and the heating temperature of the superposed polyester layers housed inside the press are substantially the same, save for a percentage difference of about 1-2% due to the heat dispersions.

Within the framework of this embodiment, the heated press is preferably provided with a temperature control device operatively connected to the heating means and which allows to adjust the operating temperature via the aforementioned heating elements.

Preferably, the heated press comprises pressure plates which define therebetween in operation a gap comprised between 1 and 7 mm.

In this way, the heated press allows to adjust the thickness of the multi-layered polyester part at the desired values.

Preferably, the shaped mold comprises: a positive die; a negative die, coaxially positioned with respect to the positive die; and a feeding device for feeding the multi-layered polyester part between the positive die and the negative die.

In this way, the operation of the shaped mold could be easily automated with a beneficial reduction of costs.

In a preferred embodiment, the positive die and the negative die define therebetween in operation a gap comprised between 4 and 20 mm.

In this way, the shaped mold allows to adjust the thickness of the final panel at the desired values.

In a preferred embodiment, the shaped mold comprises cooling means, such as, for example, one or more conduits in which a suitable cooling fluid such as water is circulated, which allows to reach and maintain the desired operating temperature comprised, as said above, between 10°C and 40°C and more preferably between 20°C and 30°C.

Within the framework of this embodiment, the shaped mold preferably comprises a temperature control device operatively connected to the cooling means and which allows to adjust the operating temperature via the aforementioned cooling elements.

In other words, the shaped mold is preferably a so called "cold mold" which serves the double function of shaping the panel while its core element (the multi-layered polyester part) is still in a heated and deformable condition and of cooling the same while bonding at the same time the temperature-sensitive decorating layer to the polyester part.

Preferably, the heated press and the shaped mold are positioned close to each other or, in any way, they are positioned in such a way that the conveyor device positioned between them is able to transport the multi-layered polyester part leaving the heated press to the shaped mold as rapidly as possible, preferably in a time lower than 10 seconds, more preferably lower than 6 seconds.

This arrangement advantageously allows to manufacture a totally recyclable panel including a decorating layer by shaping the multi-layered polyester part leaving the heated press while this element is still in a heated and deformable state avoiding at the same time the risk of damaging the temperature-sensitive decorating layer.

In a preferred embodiment, the plant also comprises transporting means for transporting a set of layers and feeding them to the heated press.

In one embodiment, the transporting means automatically transport and supply to the heated press each layer individually; in this way, the layers are superposed one to each other as soon as they are supplied to the press.

In an alternative embodiment, the layers may be superposed one to each other on the transporting means and then they are supplied to the press as a stack of superposed layers.

In a preferred embodiment, the shaped mold comprises conventional air releasing means, such as check valve means, adapted to allow the removal of air from the shaped mold while the positive and negative dies are moved close to each other and to prevent said air to enter again into the shaped mold.

In a preferred embodiment, the shaped mold further comprises a vacuum pump, in fluid communication with the gap defined in operation within the shaped mold between the positive and negative dies.

More particularly, the vacuum pump is operated when the gap between the positive die and the negative die reaches a minimum value and is adapted to suck air from the shaped mold during the aforementioned shaping step e).

As outlined above, this feature advantageously allows to achieve an air permeable panel by enhancing the circulation of air through the superposed layers positioned in the shaped mold, thereby improving the air flow resistance characteristics and, along therewith, the sound absorption characteristics, of the final panel.

In a preferred embodiment, the plant further comprising collecting means adapted to receive the automotive panel molded in the shaped mold.

In this way, the operation of the plant may be automated with an advantageous reduction of the processing times and costs.

Additional features and advantages of the present invention will be more readily apparent by the following detailed description of some preferred embodiments, given hereinbelow by way of illustration and not of limitation with reference to the attached drawings. In these drawings:
- Figs. 1 and 2 represent schematic views of comparative automotive panels known in the automotive industry;
- Figs. 3 to 6 represent schematic views of some preferred embodiments of automotive panels according to the present invention, not having a decorating layer;
- Figs. 7 to 10 represent schematic views of some preferred embodiments of automotive panels according to the present invention, having a decorating layer;
- Fig. 11 represents a schematic view of a preferred embodiment of a plant for manufacturing the automotive panels according to the present invention;
- Fig. 12 represents a schematic view of a preferred embodiment of a plant according to the present invention for manufacturing the automotive panels according to the present invention;
- Fig. 13 represents a stress-strain diagram of some preferred embodiments of the automotive panels according to the present invention.

### EXAMPLES 1-2

### (Comparative art)

### Example 1

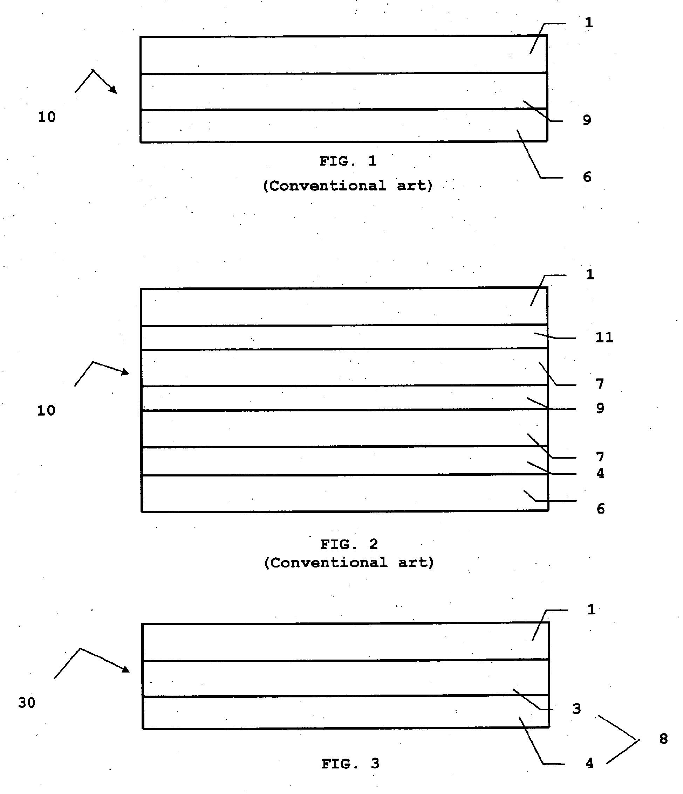

A first comparative automotive panel 10 manufactured according to the conventional art is schematically shown in Fig. 1. The panel is an automotive headliner comprising a polyurethane foam layer 9 and a decorating layer 6, to be applied to a metal roof 1 of a vehicle (not shown). The process for manufacturing said panel 10 involved the preparation of a core of polyether foam filled with isocyanate that, after cross-linking, became a solid polyurethane sheet. The bonding of layer 9 to layer 6 has been obtained by bleeding through part of the isocyanate resin.

### Example 2

A second comparative panel manufactured according to the conventional art is schematically shown in Fig. 2). This panel is an automotive headliner 10, comprising, in order, a non-woven back sheet layer 11 having a basis weight of 40 g/m², a first glass fiber matt layer 7 having a basis weight of 150 g/m², a polyurethane foam layer 9 having a basis weight of 700 g/m², a second glass fiber matt layer 7 having a basis weight of 150 g/m², a PET foam layer 4 and a decorating layer 6, such an automotive headliner 10 being applied to a metal roof 1 of a vehicle (not shown). The process for manufacturing said panel 10 is similar to the one previously disclosed for obtaining the panel of Fig. 1

The comparative panels described above were then subjected to a series of tests in order to measure the degree of crystallinity of the bonded the superposed layers forming the same as well as the air flow resistance, the elongation at break, the ultimate tensile strength and the rigidity of the panel.

The degree of crystallinity of the superposed layers was measured by a differential scanning calorimetry (DSC) method using a PerkinElmer Pyrys 6 DSC instrument, according to the method disclosed in the Thermal Analysis Application Note "DSC as Problem Solving Tool: Measurement of Percent Crystallinity of Thermoplastics" by W. J. Sichina, 2000, Perkin Elmer™ Instruments, Norwalk CT, USA.

The air flow resistance of the panel was measured according to the method disclosed in DIN EN 29053, by using an instrument of the AFM 80 type produced by Norsonic Tippkemper GmbH, Oelde-Stromberg, Germany. The measuring instrument consisted of a pressure vessel and a piston, which was propelled over an eccentric cam and in the pressure vessel a change pressure with a frequency of 2 cycles per second is produced. The pressure change was detected over a condenser microphone and indicated in a display, reporting the air flow resistance of the materials expressed in Ns/m³.

The elongation at break of the panel was measured according to the method disclosed in DIN 53857, by using an instrument of the Allround-Line type, T1- FR 100 model produced by Zwick-Roel, Ulm, Germany. The measuring instrument consisted of a fixed point and a movable segment. The sample panel was fixed at one end and then dragged till a break occurred, marking the distance from the fixed end reached at the breaking point. The elongation at break was then the elongation recorded at the moment of rupture of the sample, expressed as a percentage of the original length.

The ultimate tensile strength, corresponding to the maximum load on the sample before a rupture occurred, was also measured by the same method and expressed in N.

The rigidity of the panel was measured according to the "Three point loading test" method disclosed in ISO 899-2:2003, by placing a specimen of the panel having a size of 75x200 mm onto a fixed support constituted by two support points, the distance between them being of 150 mm. The panel was subjected to stress energy, expressed in N/m², applied by a rod onto a third point located at the centre of the specimen sample; the related strain percentage (%) occurred to the panel upon said stress energy was measured.

The rigidity, considered herein as the ability to resist deformation under flexural load, is given by the stress to strain ratio measured at the energy necessary to obtain the maximum strain.

The crystallinity, the air flow resistance, the elongation at break, the ultimate tensile strength and the rigidity of the headliners 10 according to comparative Examples 1-2 measured as described above are reported in following Table 1.

### EXAMPLES 3-6

### (Invention)

### Example 3

A panel according to a first preferred embodiment of the present invention is schematically shown in Fig. 3.

More specifically, the panel is a car headliner 30 essentially consisting of a multi-layered polyester part 8 comprising a PET foam layer 4 and a PET non-woven layer 3.

As shown in Fig. 3, the headliner 30 is applied in a conventional way, for example by gluing, to a metal roof 1 of a vehicle (not shown).

The PET foam layer 4 has a basis weight of 100 g/m² with a thickness of 7 mm; the PET non-woven layer 3 has a thickness of 10 mm and comprises a mixture comprising 70% by weight of needled bonded non-woven PET fiber with fibers having a length of 60 mm with a Dtex of 3.3 and 30% by weight of crystalline non-woven PET fiber with fibers having a length of 51 mm with a Dtex of 4.4, the mixture having an overall basis weight of 800 g/m².

The PET foam layer 4 and the PET non-woven layer 3 have a degree of crystallinity of 49%. Thus, the headliner 30 is advantageously constituted by a multilayered structure made of one and the same polymer (PET) which may be easily recycled and which shows no sagging.

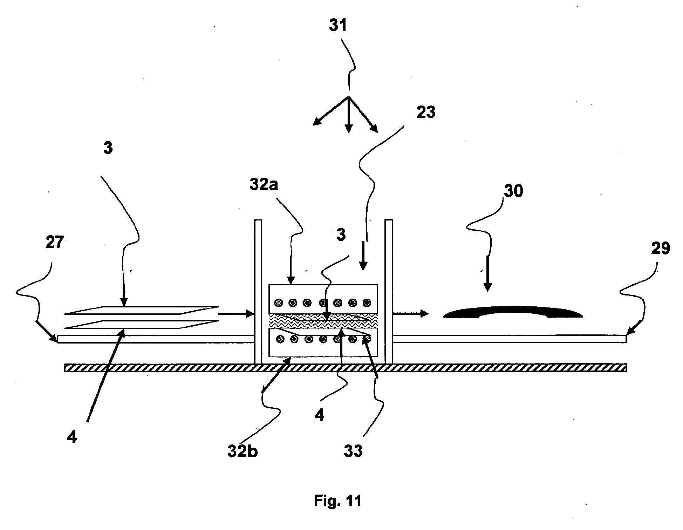

With reference to Fig. 11, a plant 31 for manufacturing the automotive panels of the invention, for example the automotive panel schematically shown in Fig. 3, will be now described.

The plant 31 comprises a heated press 23 having suitable means for simultaneously pressing, heating and shaping the layers 3 and 4 which are fed to the heated press 23 in a stacked arrangement by means of suitable transporting means, such as a conveyor belt 27.

The pressing means of the press 23 are for example constituted by two pressure plates 32a and 32b which define therebetween in operation a gap of, for example, 4 mm.

The heating means of the heated press 23 are for example constituted by a plurality of heating elements 33, such as for example of the electric type, adapted to maintain the press at a predefined operating temperature.

In this embodiment of the plant 31, the pressure plates 32a and 32b are suitable shaped so as to impart the desired final shape to the panel while the stacked layers 3 and 4 are pressed and heated in the heated press 23.

Preferably, the heated press 23 is provided with a temperature control device, conventional per se and not shown, operatively connected to the heating elements 33 and adapted to adjust the working temperature of the pressure plates 32a and 32b at proper values by acting in a way conventional *per se* to the heating elements 33.

The plant 31 according to this embodiment further comprises collecting means 29 adapted to receive the automotive panel 30 manufactured in the heated press 23 and to transport the same to the other parts of a factory (not shown).

With reference to the plant 31 shown in Fig. 11 and to the headliner 30 illustrated in Fig. 3, a preferred embodiment of the manufacturing process of the invention will be now described.

Initially, the process includes the steps of providing the aforementioned PET non-woven layer 3 and the PET foam layer 4 in a way known *per se,* such as by carding and needling the PET non-woven layer 3 and by extruding the PET foam layer 4.

Next, the PET non-woven layer 3 and the PET foam layer 4 are superposed to each other so as to create a layered structure; this superposing step may be carried out either upstream of the heated press 23, for example by stacking the layers 3, 4 on the conveyor belt 27 or, alternatively, inside the heated press 23, for example by stacking the layers 3, 4 on the lower pressure plate 32b.

Next, the process includes the step of simultaneously pressing and heating the superposed PET non-woven layer 3 and PET foam layer 4 so as to bond them together and to promote at least a partial crystallization thereof.

Advantageously and as will be discussed later on, the partial crystallization of the PET contained in the superposed layers 3 and 4 imparts stability and rigidity to the final headliner 30.

By way of example, this pressing and heating step may be carried out so as to heat the superposed PET non-woven layer 3 and PET foam layer 4 at a temperature of 230°C and to press the superposed layers 3, 4 at a pressure of 50 T/m² for a time of 15 seconds.

During this step and in order to achieve the desired final thickness of the headliner 30, the heated press 23 was operated such that the pressures plates 32a, 32b defined therebetween a gap of 4 mm.

The process also includes the step of shaping the superposed layers 3 and 4 in order to form the headliner 30.

In this embodiment, this shaping step is advantageously carried out simultaneously with the step of pressing and heating the superposed PET non-woven layer 3 and PET foam layer 4 within the heated press 23.

In this way, the PET foam layer 4 and the PET non-woven layer 3 may be bonded to each other, may be given the desired rigidity and at the same time may be shaped to give the desired shape and thickness of the final headliner 30 in one and the same step with an advantageous simplification of the process and of the plant 31 delegated to carry out the same.

The headliner 30 so obtained may then leave the heated press 23 and may be collected by the collecting means 29 to be transported to the other parts of the factory.

The headliner 30 is then ready to be used and may be applied to the metal roof 1 of a vehicle (not shown) by conventional bonding methods, such as by gluing.

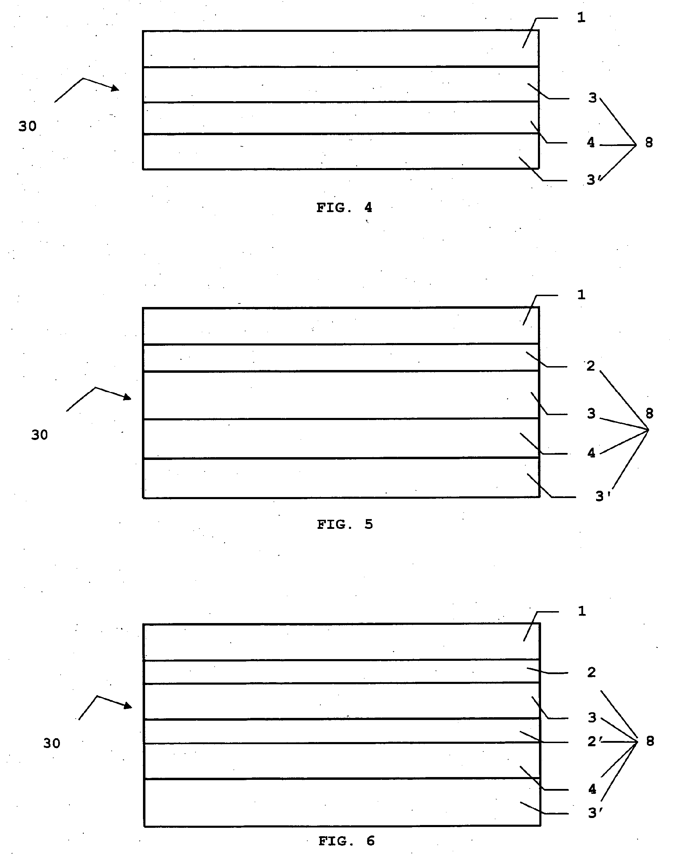

Additional preferred embodiments of the automotive panel of the invention will now be described with reference to Figs. 4 to 6, wherein equal numbers refer to equal elements, in terms of thickness and of materials comprised therein.

### Example 4

A panel according to another preferred embodiment of the invention is schematically shown in Fig. 4. The panel is a headliner 30 which differs from the panel of the previous embodiment shown in Fig. 3 in that it includes an additional PET non-woven layer 3', in such a way that a sandwich structure is obtained wherein the PET foam layer 4 is positioned between the two PET non-woven layers 3, 3'.

Also in this case, therefore, the headliner 30 is advantageously constituted by a multilayered structure made of one and the same polymer (PET) and which is easily recyclable.

### Example 5

A panel according to another preferred embodiment of the present invention is schematically shown in Fig. 5. This panel is a headliner 30 which differs from the panel of the previous embodiment shown in Fig. 4 in that it includes an uppermost PET layer 2 bonded to the non-woven layer 3 and positioned in operation between the PET non-woven layer 3 and the metal roof 1.

The layer 2 has a thickness of 1.5 mm and comprises a non-woven fabric made of meltblown polyester made of filaments with a Dtex of 0.9.

Thus, the headliner 30 is advantageously constituted by a multilayered structure made of one and the same polymer (PET) and which is easily recyclable.

### Example 6

A panel according to another preferred embodiment of the invention is schematically shown in Fig. 6.

The panel is a headliners 30 which differ from the panel of the previous embodiment shown in Fig. 5 in that it includes an additional PET layer 2', interposed between the PET non-woven layer 3 and the PET foam layer 4.

Thus, the headliner 30 schematically shown in Fig. 6 is advantageously constituted by a multilayered structure made of one and the same polymer (PET) and which is easily recyclable.

All the panels according to the preferred embodiments of the present invention schematically shown in Figs. 4 to 6 have been manufactured by means of the manufacturing process and plant 31 described above with reference to the preferred embodiment of Fig. 3, save for the necessary adaptations related to the fact that the set of layers supplied to the heated press 23 included a different number and kind of layers.

Thus, for example, the required polyester layers were stacked in the proper way on the conveyor belt 27 and the operating parameters of the heated press 23 (pressure, temperature, gap between the pressure plates 32a, 32b) were adjusted to obtain the panel structures shown in Figs. 4 to 6 and having the desired final thickness.

The panels manufactured as described above were then subjected to the tests indicated above in order to measure the degree of crystallinity of the bonded the superposed layers forming the same as well as the air flow resistance, the elongation at break, the ultimate tensile strength and the rigidity of the panels.

These parameters were obtained in the same way as mentioned above and are reported in the following Table 1.

**TABLE 1**

| Examples | Foam and non-woven layers | Panel thickness [mm] | Crystallinity [%] | Rigidity (stress to strain) | Air flow resistance [Ns/m³] | Ultimate Tensile Strength [N] | Elongation at break [%] |
|---|---|---|---|---|---|---|---|
| Fig. 1 (conv. art) | NO | 18 | 15 | -- | 180.0 | n.a. | n.a. |
| Fig. 2 (conv. art) | NO | 20 | 15 | -- | 258.6 | 592.3 | 2.2 |
| Fig. 3 (inv.) | YES | 16 | 49 | 15.6 | 590.6 | 2056.7 | 3.5 |
| Fig. 4 (inv.) | YES | 16 | 63 | 25.7 | 679.6 | 2124.3 | 4.6 |
| Fig. 5 (inv.) | YES | 18 | 74 | -- | 834.9 | 2189.6 | 5.2 |
| Fig. 6 (inv.) | YES | 18 | 76 | -- | 891.7 | 2198.4 | 5.8 |

By comparing the panels described above and by examining the results contained in Table 1, the following may be observed.

The comparative panel of Example 1 (conventional art) showed a low degree of crystallinity and low values of the air flow resistance.

The comparative panel of Example 2 (conventional art) has the disadvantage that it is not totally recyclable in a simple manner, due to the fact that it contains glass-fiber, polyurethane and PET components.

On the other hand, the panels according to the preferred embodiments of the present invention schematically shown in Figs. 3 to 6 were useful as panels in the automotive industry which requires an air flow resistance of at least 500 Ns/m³, an ultimate tensile strength of at least 2,000 N, an elongation at break values in the range from 2 to 10% and a rigidity of at least 10.

In particular, the panels according to the preferred embodiments of the present invention schematically shown in Figs. 3 and 4 showed good rigidity, while the panels according to the preferred embodiments of the present invention schematically shown in Figs. 5 and 6, including the additional PET layer 2, showed particularly improved values of crystallinity, air flow resistance, ultimate tensile strength and elongation at break.

Advantageously, furthermore, all the panels of the invention are totally recyclable, easy to be applied to the roof of a vehicle, cheap due to the use of very few raw materials and have a low weight.

On the contrary, the conventional art panels shown in Figs. 1 to 2 showed a very poor crystallinity (lower than 25%), low air flow resistance values (lower than 500 Ns/m³) and low ultimate tensile strength values (lower than 2,000 N) well below the minimum values required by the automotive industry.

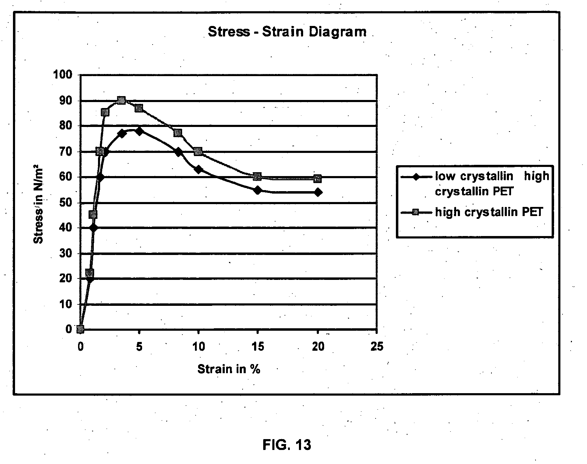

The advantageous effects of the crystallinity degree in terms of rigidity, ultimate tensile strength and elongation at break of the panels according to the invention may be clearly appreciated by the stress-strain diagrams of the panels according to the inventive Examples 3 and 4 shown in Fig. 13.

As may be visually appreciated by observing these diagrams, an increase in the degree of crystallinity of the layers forming the panel triggers an advantageous increase of rigidity (proportional to the ratio between the stress and strain values at the maximum of the diagrams), ultimate tensile strength and elongation at break of the panel itself.

### EXAMPLES 7-10

### (Invention)

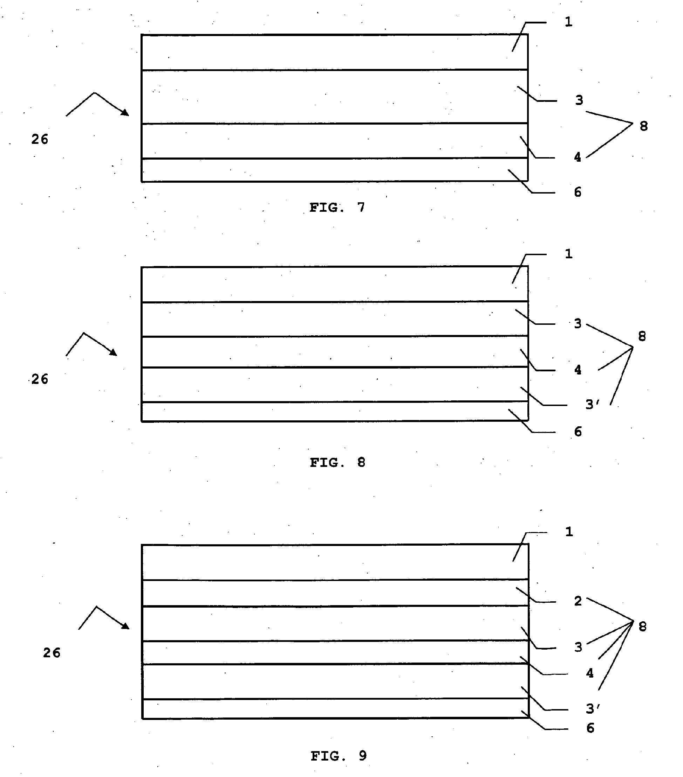

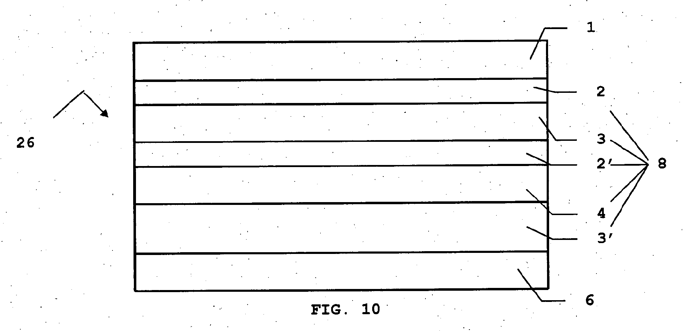

Additional preferred embodiments of the automotive panel of the invention will now be described with reference to Figs. 7 to 10, wherein equal numbers refer to equal elements, in terms of thickness and materials.

### Example 7

The panel according to this preferred embodiment is schematically shown in Fig. 7 and is a headliner 26 including a multi-layered polyester part 8 which differs from the headliner schematically shown in Fig. 3 in that it further includes an outer, in this case lowermost, decorating layer 6 adapted to give the automotive panel better finishing and aesthetic properties.

The outer decorating layer 6 is made of polyester woven fabric having a thickness of 1.4 mm, has a basis weight of 80 g/m² and is coupled to the PET foam layer 4 on the opposite side with respect to the PET non-woven layer 3 which is to be bonded to the roof 1 of the vehicle (not shown).

Thus, the headliner 26 is advantageously constituted by an easily recyclable multilayered structure made of one and the same polymer (PET) and which is easily recyclable.

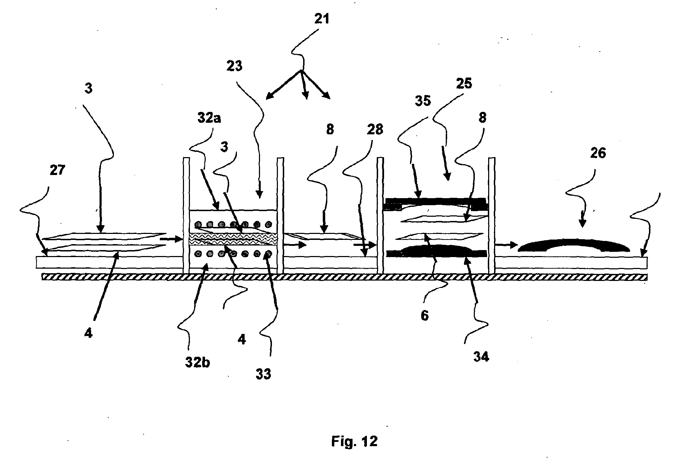

With reference to Fig. 12, a plant 21 for manufacturing the automotive panel 26 including a decorating layer 6 made of polyester woven fabric, for example the automotive panel schematically shown in Fig. 7, will be now described.

In the plant 21 shown in Fig. 12, equal numbers refer to equal elements with respect to the plant 31 shown in Fig. 11 previously described.

More specifically, the plant 21 shown in Fig. 12 differs from the plant 31 shown in Fig. 11 in that the heated press 23 is a flat press, i.e. it comprises substantially flat pressure plates 32a, 32b, and in that it further comprises a shaped mold 25 and a conveyor device 28 positioned between the heated press 23 and the shaped mold 25.

Conveniently, the conveyor device 28 transports the multi-layered polyester part 8 comprising the superposed polyester layers 3, 4 which is formed in the flat heated press 23 from this press to the shaped mold 25.

In this embodiment, the substantially flat pressure plates 32a and 32b of the heated press 23 define therebetween in operation a gap of 2 mm.

The shaped mold 25 comprises in turn a positive die 34, a negative die 35, coaxially positioned with respect to the positive die 34, and a feeding device (conventional *per se* and not shown) for introducing the multi-layered polyester part 8 transported by the conveyor device 28 between the positive die 34 and the negative die 35.

In this embodiment, the positive die 34 and the negative die 35 are suitably shaped in order to impart the desired shape to the panel manufactured in the shaped mold 25 by bonding together the multi-layered polyester part 8 formed in the flat heated press 23 and the decorating layer 6.

Similarly to what is done in the heated press 23, the multi-layered polyester part 8 including the layers 3 and 4 bonded together and the decorating layer 6 are superposed to each other before operating the shaped mold 25.

In this preferred embodiment, the positive die 34 and the negative die 35 define therebetween in operation a gap of, for example, 4 mm in order to have a panel 26 having the desired final thickness of 18 mm.

In a preferred embodiment, the shaped mold 25 is a so-called "cold mold" and may be provided with cooling means (not shown), such as for example one or more conduits in which water is circulated, capable to maintain the shaped mold 25 at an operating temperature comprised between 10°C and 40°C.

Additionally, the shaped mold 25 is preferably provided with check valve means, conventional *per se* and not shown, adapted to allow the air present inside the shaped mold to be released and to prevent it from entering again inside the shaped mold.

In a preferred embodiment, the plant 21 further comprises a vacuum pump, conventional *per se* and not shown, which is in fluid communication with the gap defined in operation within the shaped mold 25 between the positive die 34 and the negative die 35. Advantageously, the vacuum pump is adapted to effectively suck air from the superposed layers 3, 4 and 6 being press-shaped in the shaped mold 25 during the shaping step e), once part of the air originally present in the shaped mold 25 has already been released therefrom by means of the aforementioned conventional check valve means.

As outlined above, the vacuum pump advantageously allows to achieve an air permeable panel 26 having improved air flow resistance characteristics and, along therewith, improved sound absorption characteristics.

In this embodiment, the collecting means 29 are positioned downstream of the shaped mold 25 so as to collect the automotive panel 26 formed in the shaped mold 25.

Most advantageously, the plant 21 allows to manufacture a totally recyclable panel including a temperature-sensitive decorating layer 6 bonded to the multi-layered polyester part 8, avoiding the risk of damaging the decorating layer.

With reference to the plant 21 shown in Fig. 12 and to the headliner 26 illustrated in Fig. 7, a preferred embodiment of the manufacturing process of the invention will now be described.

Initially, the process includes the steps of providing the aforementioned PET non-woven layer 3 and the PET foam layer 4 in a way known *per se,* such as by such as by carding and needling the PET non-woven layer 3 and by extruding the PET foam layer 4.

Next, the step of superposing the PET non-woven layer 3 and the PET foam layer 4 is carried out so as to create a layered structure; this superposing step may be carried out either upstream of the flat heated press 23, for example by stacking the layers 3, 4 on the conveyor belt 27 or, alternatively, inside the flat heated press 23, for example by stacking the layers 3, 4 on the lower pressure plate 32b.

Next, the process includes the step of simultaneously pressing and heating the superposed PET non-woven layer 3 and PET foam layer 4 so as to bond them together to form the multi-layered polyester part 8 and to promote at least a partial crystallization of the polyester layers.

By way of example, this pressing and heating step may be carried out so as to heat the superposed PET non-woven layer 3 and PET foam layer 4 at a temperature of 230°C and to press the superposed layers 3, 4 at a pressure at a pressure of 50 T/m² for a time of 15 seconds.

During this step and in order to achieve the desired final thickness of the headliner 26, the flat heated press 23 was operated such that the pressures plates 32a, 32b defined therebetween a gap of 2 mm.

Advantageously and as has been discussed earlier, the partial crystallization of the PET in the superposed layers 3 and 4 imparts stability and rigidity to the final headliner 26.

Analysis of the multi-layered polyester part 8 carried out by a differential scanning calorimetry (DSC) method using a PerkinElmer Pyrys 6 DSC instrument according to the procedure described above, showed that the simultaneous heating and pressing step carried out in the flat heated press 23 promoted a partial crystallization of the PET contained in the multi-layered polyester part 8 including the superposed bonded layers 3 and 4 in such a way that the total PET present in the layers 3, 4 reached a degree of crystallinity of 49%.

The process also includes the steps of providing the decorating layer 6 made of polyester woven fabric and having a thickness of 1.4 mm, in a way known *per se,* such as by knitting, and of transferring the multi-layered polyester part 8 including the bonded superposed PET layers 3, 4 obtained in the flat heated press 23 to the shaped mold 25.

Preferably, the step of transferring the multi-layered polyester part 8 to the shaped mold 25 is carried out by means of the conveyor device 28 in a time lower than 10 seconds so as to keep the multi-layered polyester part 8 in a heated and easily deformable state and to facilitate the shaping operation within the shaped mold 25.

In this embodiment, the process includes the steps of arranging the decorating layer 6 in the shaped mold 25 prior to effecting the shaping step and of press-bonding the decorating layer 6 to the multi-layered polyester part 8 including the superposed bonded layers 3, 4 during the shaping step.

In other words, in this embodiment of the invention the process provides for the simultaneous shaping of the panel 26 including the multi-layered polyester part 8 and the decorating layer 6 and press-bonding of the decorating layer 6 to the multi-layered polyester part 8.

In this embodiment, therefore, this shaping and bonding step is carried out in the shaped mold 25 subsequently to the step of pressing and heating the superposed PET non-woven layer 3 and PET foam layer 4 within the heated flat press 23.

In this way, the PET foam layer 4 and the PET non-woven layer 3 are first bonded to each other and given the desired mechanical characteristics and then bonded to the decorating layer 6 and simultaneously shaped to give the desired shape and thickness of the final headliner 26 without impairing the aesthetic characteristics of the decorating layer 6.

Preferably, the shaping and bonding treatment is carried out in the shaped mold 25 at a pressure of 150 T/m² for 10 seconds so as to give the desired shape and thickness to the final headliner 26.

Preferably, the shaped mold 25 is operated at room temperature and, if appropriate, cooled so as not to exceed the temperature of 40°C by means of the aforementioned cooling means.

Preferably, furthermore, air was sucked from the layers 3, 4 and 6 which were being simultaneously subjected to the shaping and bonding treatment by means of the vacuum pump so as to achieve the aforementioned enhanced sound absorption characteristics of the final panel 26.

The headliner 26 so obtained may then leave the shaped mold 25 and may be collected by the collecting means 29 to be transported to the other parts of the factory.

The headliner 26 is then ready to be used and may be applied to the metal roof 1 of a vehicle (not shown) by conventional bonding methods, such as by gluing.

The headliner 26 obtained in this way is advantageously constituted by a multilayered structure made of one and the same polymer (PET) and which is easily recyclable, has good finishing properties and is easy to be applied to the roof of a vehicle.

Additional preferred embodiments of the automotive panel of the invention will now be described with reference to Figs. 8 to 10, wherein equal numbers refer to equal layers, in terms of thickness and materials.

### Examples 8-10

The panels schematically shown in Figs. 8 to 10 differ from the panels schematically shown, respectively, in Figs. 4 to 6 in that they further include the outer decorating layer 6 bonded to the lowermost layer of the multi-layered polyester part 8 opposite to the layer which is intended to be bonded to the roof 1 of the vehicle.

Thus, the headliners 26 schematically shown in Figs. 8 to 10 are advantageously formed by a multilayered structure made of one and the same polymer (PET) and are easily recyclable and adapted to give the automotive panel enhanced finishing and aesthetic properties.

The same manufacturing process and plant 21 described above for producing the headliner 26 schematically shown in Fig. 7 have also been adapted for manufacturing the headliners 26 schematically shown in Figs. 8 to 10, save for the necessary adaptation of the process parameters (pressures, temperatures and gap defined between the pressure plates 32a, 32b of the flat heated press 23 as well as pressures, temperatures and gap defined between the positive die 34 and the negative die 35 of the shaped mold 25) to take account of the different number and kind of layers and of the final desired thickness of the panel.

At the end of the shaping treatment carried out in the shaped mold 25, the final headliners 26 comprising an outer decorating layer 6 had the desired shape. The headliners 26 so obtained have been then applied to the metal roof 1 of a vehicle (not shown) by conventional bonding methods, such as by gluing.

Tests carried out on the panels of Examples 7-10 showed that these panels, which differ from the panels of the preceding Examples 3-6 just for the presence of the decorating layer 6, possess substantially the same values of degree of crystallinity of the bonded the superposed layers, air flow resistance, elongation at break, ultimate tensile strength and rigidity.

Naturally, the examples given above must be understood as being a mere not limitative illustration of some possible embodiments of the automotive panel of the invention and of the process and plant to manufacture the same. It is to be understood, therefore, that numerous modifications in and changes hereof are possible without thereby going beyond the scope as defined by the following claims.

## Claims

1. Automotive panel (26, 30) including a totally recyclable polyester part (8) comprising:
- a first layer (4) comprising a polyester material selected from polyester foams, polyester beads, and combinations thereof; and
- at least a second layer (3) comprising a polyester non-woven fabric, wherein said first (4) and second (3) layers have a degree of crystallinity of at least 25%.

2. Automotive panel (26, 30) according to claim 1 wherein said first and second layers (3, 4) have a degree of crystallinity of at least 30%.

3. Automotive panel (26, 30) according to claim 1 having an air flow resistance comprised between 500 and 1,200 Ns/m³, as measured according to DIN EN 29053.

4. Automotive panel (26, 30) according to claim 3 having an air flow resistance comprised between 600 and 900 Ns/m³.

5. Automotive panel (26, 30) according to claim 1 wherein the thickness of said first layer (4) is comprised between 1 and 20 mm.

6. Automotive panel (26, 30) according to claim 1 wherein said first layer (4) comprises a polyester foam having a basis weight comprised between 20 and 2,000 g/m².

7. Automotive panel (26, 30) according to claim 6 wherein said polyester foam has a basis weight comprised between 90 and 1,000 g/m².

8. Automotive panel (26, 30) according to claim 1 wherein the totally recyclable polyester part (8) further comprises at least a third additional layer (3') comprising a polyester non-woven fabric.

9. Automotive panel (26, 30) according to claim 8 wherein said first layer (4) is interposed between said at least a second (3) and third (3') layers comprising a polyester non-woven fabric.

10. Automotive panel (26, 30) according to claim 1 or 8 wherein the thickness of said at least a second layer (3) or said at least a third (3') layer is comprised between 3 and 30 mm.

11. Automotive panel (26, 30) according to any one of claims 1 or 8 wherein said at least a second (3) layer or said at least a third (3') layer is made of a polyester non-woven fabric selected from the group comprising: non-woven fabrics made of at least partially crystalline polyester fibers, non-woven fabrics made of carded polyester fibers, non-woven fabrics made of airlayed polyester fibers, non-woven fabrics made of thermobonded polyester fibers, non-woven fabrics made of needled bonded polyester fibers, non-woven fabrics made of hydroentangled bonded polyester fibers, non-woven fabrics made of spunbonded polyester filaments, non-woven fabrics made of meltblown polyester filaments, and mixtures thereof.

12. Automotive panel (26, 30) according to any one of claims 1 or 8 wherein said at least a second (3) layer or said at least a third (3') layer comprises a mixture including:
i) a non-woven fabric made of at least partially crystalline polyester fibers, and
ii) a non-woven fabric made of needled polyester fibers.

13. Automotive panel (26, 30) according to claim 12 wherein both said at least a second (3) layer and said at least a third (3') layer comprise a mixture including:
i) a non-woven fabric made of at least partially crystalline polyester fibers, and
ii) a non-woven fabric made of needled polyester fibers.

14. Automotive panel (26, 30) according to any one of claims 12 or 13 wherein said mixture comprises at least 20% by weight of said non-woven fabric made of at least partially crystalline polyester fibers.

15. Automotive panel (26, 30) according to any one of claims 12 to 14 wherein said mixture comprises at least 60% by weight of said non-woven fabric made of needled polyester fibers.

16. Automotive panel (26, 30) according to any one of claims 1 or 8 wherein said at least a second (3) layer or said at least a third (3') layer comprises a polyester non-woven fabric comprising fibers or filaments having a Dtex comprised between 0.6 and 30.

17. Automotive panel (26, 30) according to claim 16 wherein said at least a second (3) layer or said at least a third (3') layer comprises a polyester non-woven fabric comprising fibers or filaments having a Dtex comprised between 1.7 and 12.

18. Automotive panel (26, 30) according to any one of claims 1 or 8 wherein said at least a second (3) layer or said at least a third (3') layer comprises a polyester non-woven fabric having a basis weight comprised between 10 and 1,500 g/m².

19. Automotive panel (26, 30) according to claim 18 wherein said at least a second (3) layer or said at least a third (3') layer comprises a polyester non-woven fabric having a basis weight comprised between 100 and 800 g/m².

20. Automotive panel (26, 30) according to claim 8 wherein the totally recyclable polyester part (8) further comprises at least a fourth additional layer (2) comprising a polyester non-woven fabric, said fourth layer being positioned adjacent to one of said at least a second (3) layer or said at least a third (3') layer.

21. Automotive panel (26, 30) according to claim 20 wherein said at least a fourth additional layer (2) is positioned between said first layer (4) and one of said at least a second (3) layer and said at least a third (3') layer.

22. Automotive panel (26, 30) according to claim 20 or 21 wherein said at least a fourth additional layer (2) is thinner than said at least a second (3) layer and said at least a third (3') layer.

23. Automotive panel (26, 30) according to any one of claims 20 to 22 wherein said at least a fourth additional layer (2) is made of a non-woven fabric made of meltblown polyester filaments.

24. Automotive panel (26, 30) according to any one of claims 1, 8 or 20 further comprising an outer decorating layer (6) bonded to said polyester part (8).

25. Automotive panel (26, 30) according to claim 24 wherein said decorating layer (6) is a polyester woven fabric, a polyester non-woven fabric, a polyester knitted fabric or a Maliwatt fabric.

26. Automotive panel (26, 30) according to any one of claims 1 to 25 wherein said polyester is selected from poly(alkylene dicarboxylates) and polyarylates.

27. Automotive panel (26, 30) according to claim 26 wherein said polyester is selected from polyethylene terephthalate (PET), polypropylene terephthalate (PPT), polybutylene terephthalate (PBT), and mixtures thereof.

28. Process for manufacturing an automotive panel (26, 30) including a totally recyclable polyester part (8) comprising the steps of:
a) providing a first layer (4) comprising a polyester material selected from polyester foams, polyester beads, and combinations thereof;
b) providing at least a second layer (3) comprising a polyester non-woven fabric;
c) superposing said first (4) and at least a second (3) layers;
d) simultaneously pressing and heating said superposed layers (3, 4) so as to bond together said superposed layers (3, 4) and to promote at least a partial crystallization of the polyester materials contained therein;
e) shaping said superposed layers (3, 4) so as to form said automotive panel (26, 30).

29. Process according to claim 28 wherein step d) is carried out so as to impart a degree of crystallinity of at least 25% to said superposed polyester layers (3, 4).

30. Process according to claim 28 wherein step d) is carried out so as to heat said superposed polyester layers (3, 4) at a temperature comprised between 200°C and 240°C.

31. Process according to any one of claims 28-30 wherein step d) is carried out so as to press said superposed polyester layers (3, 4) at a pressure comprised between 10 and 350 T/m², for a time comprised between 5 and 60 seconds.

32. Process according to any one of claims 28-31 wherein said shaping step e) is carried out simultaneously with said step d) in a heated press (23).

33. Process according to any one of claims 28-31 wherein said step d) is carried out in a flat heated press (23) and said step e) is carried out in a shaped mold (25) subsequently to said step d).

34. Process according to claim 33 wherein said shaped mold (25) is maintained at a temperature comprised between 10°C and 40°C during said shaping step e).

35. Process according to any one of claims 33 or 34 further comprising the step of:
f) transferring the bonded superposed layers obtained in the flat heated press (23) to the shaped mold (25) in a time lower than 10 seconds.

36. Process according to any one of claim 33 or 34 wherein said shaping step e) is carried out so as to press said superposed polyester layers (3, 4) in said shaped mold (25) at a pressure comprised between 1 and 350 T/m², for a time comprised between 3 and 15 seconds.

37. Process according to any one of claims 33 to 36 further comprising the steps of:
g) arranging a decorating layer (6) in said shaped mold (25), prior to effecting said step e), and
h) press-bonding said decorating layer (6) to said superposed polyester layers (3, 4) during said shaping step e).

38. Process according to claim 37 wherein said decorating layer (6) is made of polyester.

39. Process according to any one of claims 33-38 further comprising the step of sucking air from said shaped mold (25) during said shaping step e).

40. Process according to claim 39 wherein said sucking step is carried out by means of a vacuum pump.

41. Plant (21) for manufacturing an automotive panel (26) comprising a multi-layered polyester part (8) comprising superposed polyester layers (3, 4) and a decorating layer (6) bonded to the polyester part (8), wherein the plant (21) comprises:
a) a heated press (23);
b) a shaped mold (25) adapted to receive said decorating layer (6) and positioned downstream of the heated press (23), and
c) a conveyor device (28) positioned between the heated press (23) and the shaped mold (25) for transporting the multi-layered polyester part (8) from the heated press (23) to the shaped mold (25).

42. Plant (21) according to claim 41 wherein said heated press (23) is provided with heating means.

43. Plant (21) according to claim 42 wherein said heated press (23) comprises a temperature control device operatively connected to said heating means.

44. Plant (21) according to claim 41 wherein said heated press (23) comprises pressure plates (32a, 32b) which define therebetween in operation a gap comprised between 1 and 7 mm.

45. Plant (21) according to claim 41 wherein said shaped mold (25) comprises: a positive die (34); a negative die (35), coaxially positioned with respect to the positive die (34); and a feeding device for introducing said multi-layered polyester part (8) between the positive die (34) and the negative die (35).

46. Plant (21) according to claim 41 wherein said positive die (34) and negative die (35) define therebetween in operation a gap comprised between 4 and 20 mm.

47. Plant (21) according to claim 41 wherein said shaped mold (25) comprises cooling means adapted to maintain the shaped mold (25) at a temperature comprised between 10°C and 40°C.

48. Plant (21) according to claim 47 wherein said shaped mold (25) comprises a temperature control device operatively connected to said cooling means.

49. Plant (21) according to claim 41 further comprising a vacuum pump in fluid communication with a gap defined in operation within the shaped mold (25).

50. Plant (21) according to claim 41 further comprising collecting means (29) adapted to receive the automotive panel (26) molded in the shaped mold (25).
